# EUROPÄISCHE PATENTSCHRIFT

(11) **EP 2 397 353 B1**
(45) Veröffentlichungstag und Bekanntmachung des Hinweises auf die Patenterteilung: **02.01.2013**
(21) Anmeldenummer: 10166060.3
(22) Anmeldetag: 15.06.2010
(51) Int. Cl.: B60J 7/12, B60J 7/00

(54) **Dachplane für Verdecke von LKW's oder LKW-Anhängern**
Roof awning for covers on HGV or HGV trailers
Bâche pour toits de poids lourds ou de remorques de poids lourds

(43) Veröffentlichungstag der Anmeldung: 21.12.2011
(73) Patentinhaber: VBG GROUP TRUCK EQUIPMENT GmbH, 47807 Krefeld (DE)
(72) Erfinder: Wensing, Udo, 46145 Oberhausen (DE); Hahnen, Hans Boris, 47475 Kamp-Lintfort (DE); Neumeyer, Frank, 47877 Willich (DE); Frentzen, Frank, 41749 Viersen (DE); Birkenbach, Rolf, 47809 Krefeld (DE); Rossbach, Joachim, 41747 Viersen (DE); Kemmerling, Karl, 42719 Solingen (DE); Scholz, Axel, 47447 Moers (DE); Lauterbach, Tim, 41066 Mönchengladbach (DE); Weigelt, Rolf, 47228 Duisburg (DE)
(74) Vertreter: Dönges, Jörg

(56) Entgegenhaltungen:
- WO-A1-2004/000592
- CH-A5- 633 750
- DE-U1-202009 007 209

## Beschreibung

Die Erfindung betrifft eine Dachplane für Verdecke von LKW's oder LKW-Anhängern, insbesondere so genannte Vollplanenverdecke, Curtain-Sider-Verdecke oder Schiebebügelverdecke. Dabei kann die Dachplane an Querspriegeln des LKW's oder LKW-Anhängers angebracht sein, wobei die Rollenwagen insbesondere jeweils Bestandteil von den Querspriegeln sein können, welche in oberhalb der Ladefläche des LKW oder LKW-Anhänger entlang der Längsseiten der Ladefläche verlaufenden Lauf- und Führungsschienen verschieblich geführt sind. Dabei ist die Dachplane zumindest teilweise doppelwandig mit wenigstens einer Kammer ausgebildet.

Aus der Praxis sind derartige Dachplanen bekannt, die beispielsweise Teile eines Schiebeverdeckes mit einer Tragekonstruktion sein können. Derartige Schiebeverdecke können als so genannte Curtain-sider mit zwei separat verschiebbaren Seitenplanen ausgebildet sein oder aber eine so genannte Vollplane haben, bei der die Dachplane mit den beiden Seitenplanen fest verbunden ist.

Auch können Dachplanen in Form eines Planenverdecks realisiert sein, das nicht verschieblich ausgebildet ist.

Nachteilig hierbei ist, dass die Dachplane konstruktionsbedingt in Teilbereichen zwischen den Querspriegeln der Tragekonstruktion immer leicht durchhängt und sich dort somit Wasser ansammeln kann, das dann im Fahrbetrieb plötzlich herunterstürzen und die Führer nachfolgender Fahrzeuge erschrecken kann. Insbesondere kann sich auf der Dachplane ansammelndes Wasser durch Minustemperaturen gefrieren, so dass dann herunterstürzende Eisschollen zu einer Gefährdung des nachfolgenden Verkehrs führen können.

Aus diesem Grund wurde eine Dachplane entwickelt, bei der die Dachplane zumindest teilweise doppelwandig mit wenigstens einer Kammer ausgebildet ist und ein Luftfüllanschlussmittel umfasst, wobei die Kammer mittels einer Luftfülleinrichtung über das Luftfüllanschlussmittel in eine zumindest außenseitig wenigstens leicht gewölbte aufgeblähte Form aufblasbar ist.

Nachteilig hier ist jedoch, dass das Abdichten der Kammer problematisch und aufwändig ist und bei Beschädigung der Kammer eine Instandsetzung nur mit erhöhtem Aufwand erfolgen konnte.

Die WO 2004 1 000 592 A1 zeigt eine Dachplane gemäß dem Oberbegriff des Anspruchs 1.

Aufgabe der Erfindung ist es also, die vorgenannten Nachteile zu vermeiden und eine Möglichkeit anzugeben, mit der die Ansammlung von Wasser und insbesondere die Bildung von Eis auf der Dachplane verhindert werden kann und die im laufenden Betrieb auch im Falle von Beschädigungen einfach und kostengünstig wieder in einen funktionsfähigen Zustand versetzt werden kann. Weitere Aufgabe der Erfindung ist es, ein Festsaugen der Innenflächen eines Blähkörpers zu verhindern.

Diese Aufgabe wird gelöst durch eine Dachplane gemäß dem Anspruch 1. Dabei können die Kammern für einen leichten Austausch eines Blähkörpers eine entsprechende, insbesondere seitlich vorgesehene Öffnung aufweisen.

Durch die Verkürzung der Kammer infolge des aufgeblähten Blähkörpers erfolgt ein Spannen der Dachplane in Längsrichtung.

Hierdurch ist ein leichter Austausch eines beschädigten Blähkörpers möglich und kleiner Beschädigungen der Kammer, welche lediglich deren Dichtigkeit beeinträchtigen, bleiben ohne Auswirkung.

Um ein Festsaugen der beiden gegenüberliegenden Innenflächen eines Blähkörpers beim Ablassen oder Absaugen von Luft zu verhindern, ***weist entweder*** zumindest ein Blähkörper im Bereich wenigstens einer seiner Innenflächen, vorzugsweise auf beiden gegenüberliegenden Innenflächen, eine Profilierung auf. Damit kommen beim Ablassen der Luft die gegenüberliegenden Innenflächen nur partiell in Kontakt, so dass ein Festsaugen verhindert wird.

Die Profilierung kann Teil der Innenfläche des Blähkörpers, beispielsweise in Form eines aufgebrachten Reliefs, sein. Es ist aber auch durchaus möglich, dass in dem Blähkörper ein separates Element vorgesehen ist, dass eine Profilierung aufweist.

*Alternativ bzw. ergänzend ist im Bereich zumindest eines Luftfüllanschlussmittels und*/*oder angrenzend an zumindest ein Luftfüllanschlussmittel eine Profilierung vorgesehen*. *Die Profilierung kann sich beispielsweise unmittelbar angrenzend an das Luftfüllanschlussmittel in derselben Hälfte der Blähkörpers befinden. Es ist aber auch durchaus möglich, dass die Profilierung in der anderen, dem Luftfüllanschlussmittel gegenüberliegenden Blähkörperhälfte angeordnet ist. Durch die Profilierung wird ein Ansaugen der dem Luftfüllanschlussmittel gegenüberliegen Innenfläche des Blähkörpers vor das Luftfüllanschlussmittel beim Ablassen oder Absaugen der Luft verhindert.*

*Sofern mehrere Blähkörper untereinander durch einen Schlauch oder dergleichen verbunden sind, wobei der Schlauch über je ein Verbindungselement an dem betreffenden Blähkörper angeschlossen ist, bietet sich an, wenn auch gleichermaßen im Bereich zumindest eines Verbindungselementes und*/*oder angrenzend an zumindest ein Verbindungselement eine Profilierung vorgesehen ist.*

Erfindungsgemäß können Luftfüllanschlussmittel vorgesehen sein, so dass eine leichte Befüllung durch den Anschluss eines Luftdruckschlauches möglich ist. Auch ist hierdurch ein Anschluss an das Druckluftsystem des LKW oder LKW-Anhängers leicht realisierbar. Dabei kann das Luftfüllanschlussmittel als Anschlusselement für einen Pneumatikschlauch ausgebildet sein, so dass sowohl eine Befüllung mit Luft und insbesondere auch gut ein Absaugen der Luft aus der Kammer erfolgen kann.

Vorzugsweise kann das Luftfüllanschlussmittel auch als Luftablassmittel ausgebildet sein, so dass lediglich ein geringer Bauteileaufwand erforderlich ist und eine einfache Steuerung des Aufblasens oder des Luftablassens möglich ist.

Vorteilhafterweise kann eine Luftfüll- und/oder Luftablass- bzw. Luftabsaugeinrichtung vorgesehen sein, so dass hierdurch eine gezielte Steuerung der Luftfüll- oder Luftablassvorgänge möglich ist und insbesondere auch beschleunigte Befüll- bzw. Ablassvorgänge möglich sind. Dabei kann die Lüftfüll- und/oder Luftablass- bzw. Luftabsaugeinrichtung an einem Endbereich der Dachplane, insbesondere an dem Führerhaus bzw. dem LKW zugewandten Ende der Dachplane, vorgesehen sein, so dass eine Platz sparende Integration möglich ist.

Vorzugsweise kann zumindest eine Kammer innenseitig auf zumindest einer Innenfläche beflockt sein, so dass ein Reiben und/oder Scheuern des Blähkörpers an den Wandungslagen und/oder ein Verkleben der Wandungslagen des Blähkörpers vermieden wird.

Erfindungsgemäß kann die doppelwandige Dachplane an zumindest einem Endbereich, insbesondere am vorderen und hinteren Endbereich, jeweils mittels Kederbefestigung angebracht sein, so dass eine stabile, jedoch leicht und ohne Werkzeug lösbare Verbindung gegen ist.

Für eine technisch einfache und unempfindliche Konstruktion können für die Bedienung und für die Steuerung der Lüftfüllung und/oder des Luftablassens bzw. Luftabsaugens manuell betätigbare Ventile vorgesehen sein.

Vorteilhafterweise kann zumindest eine Wandungslage der doppelwandigen Dachplane aus einem elastischen Material gebildet sein, wobei insbesondere die untere Wandungslage der doppelwandigen Dachplane an Querspriegeln der Tragekonstruktion, insbesondere an Querspriegeln von Schiebebügeln, beispielsweise in üblicher Art durch Befestigungslaschen, befestigbar sein.

Auch kann zumindest eine Kammer der Dachplane sich zu den Seitenbereichen hin verengend ausgebildet sein, insbesondere seitlich spitz, z. B. in Form einer Raute oder Ellipse, zulaufen, so dass automatisch eine in der Mitte erhöhte Form bei Luftbefüllung gegeben ist. Alternativ können die Endbereiche nicht vollständig spitz, sondern "mit abgeschnittener" Spitze oder Kuppe ausgebildet sein, so dass ein Sechseck bzw. ein Viereck mit zwei gewölbten Seiten entsteht. Dabei können die endseitigen Kantenbereiche offen ausgebildet sein.

Auch kann weiterhin zumindest ein Blähkörper sich zu den Seitenbereichen hin verengend ausgebildet sein, insbesondere seitlich spitz, z. B. in Form einer Raute oder Ellipse, zulaufend ausgebildet sein. Alternativ können die Endbereiche nicht vollständig spitz, sondern "mit abgeschnittener" Spitze oder Kuppe ausgebildet sein, so dass ein Sechseck bzw. ein Viereck mit zwei gewölbten Seiten entsteht.

Weiterhin kann die Kammer in Längsrichtung der Dachplane gesehen mit ihrer Mitte auf Querspriegeln des LKW oder LKW-Anhänger angeordnet sein, so dass eine gute Abstützung erfolgt und die Volumenveränderung durch die Luftfüllung zu einer möglichst großen Erhöhung der Kammermitte führt und keine Absenken der unteren Wandungslage erfolgt, was ggf. sogar zu einer Beeinträchtigung der Ladung führen könnte.

Auch können für die Steuerung der Luftfüllung und/oder des Luftablassens bzw. Luftabsaugens manuell betätigbare Ventile vorgesehen sein, so dass auf einfache Weise die Luftfüll- bzw. Luftablassvorgänge getätigt werden können. Alternativ können auch fernbedienbare und/oder automatisch bedienbare betätigbare Ventile vorgesehen sein, so dass auf einfache Weise die Luftfüll- bzw. Luftablassvorgänge vom Fahrersitz aus oder automatisch beim Abstellen (Füllen der Blähkörper) bzw. Starten (Leeren der Blähkörper) des Motors getätigt werden können.

Vorteilhafterweise kann insoweit das Luftfüllanschlussmittel auch als Luftablassmittel, durch das ein Luftaustritt möglich ist, ausgebildet sein.

Um ein Festsaugen der beiden gegenüberliegenden Innenflächen eines Blähkörpers beim Ablassen oder Absaugen von Luft zu verhindern, bietet sich an, dass zumindest ein Blähkörper im Bereich wenigstens einer seiner Innenflächen, vorzugsweise auf beiden gegenüberliegenden Innenflächen, eine Profilierung aufweist. Damit kommen beim Ablassen der Luft die gegenüberliegenden Innenflächen nur partiell in Kontakt, so dass ein Festsaugen verhindert wird.

Die Profilierung kann Teil der Innenfläche des Blähkörpers, beispielsweise in Form eines aufgebrachten Reliefs, sein. Es ist aber auch durchaus möglich, dass in dem Blähkörper ein separates Element vorgesehen ist, dass eine Profilierung aufweist.

Es bietet sich an, wenn im Bereich zumindest eines Luftfüllanschlussmittels und/oder angrenzend an zumindest ein Luftfüllanschlussmittel eine Profilierung vorgesehen ist. Die Profilierung kann sich beispielsweise unmittelbar angrenzend an das Luftfüllanschlussmittel in der selben Hälfte der Blähkörpers befinden. Es ist aber auch durchaus möglich, dass die Profilierung in der anderen, dem Luftfüllanschlussmittel gegenüberliegenden Blähkörperhälfte angeordnet ist. Durch die Profilierung wird ein Ansaugen der dem Luftfüllanschlussmittel gegenüberliegen Innenfläche des Blähkörpers vor das Luftfüllanschlussmittel beim Ablassen oder Absaugen der Luft verhindert.

Sofern mehrere Blähkörper untereinander durch einen Schlauch oder dergleichen verbunden sind, wobei der Schlauch über je ein Verbindungselement an dem betreffenden Blähkörper angeschlossen ist, bietet sich an, wenn auch gleichermaßen im Bereich zumindest eines Verbindungselementes und/oder angrenzend an zumindest ein Verbindungselement eine Profilierung vorgesehen ist.

Im Folgenden wird ein in der Zeichnung dargestelltes Ausführungsbeispiel der Erfindung erläutert. Es zeigen:
- Fig. 1: eine erfindungsgemäße Dachplane mit noch nicht mit Luft gefüllten Blähkörpern,

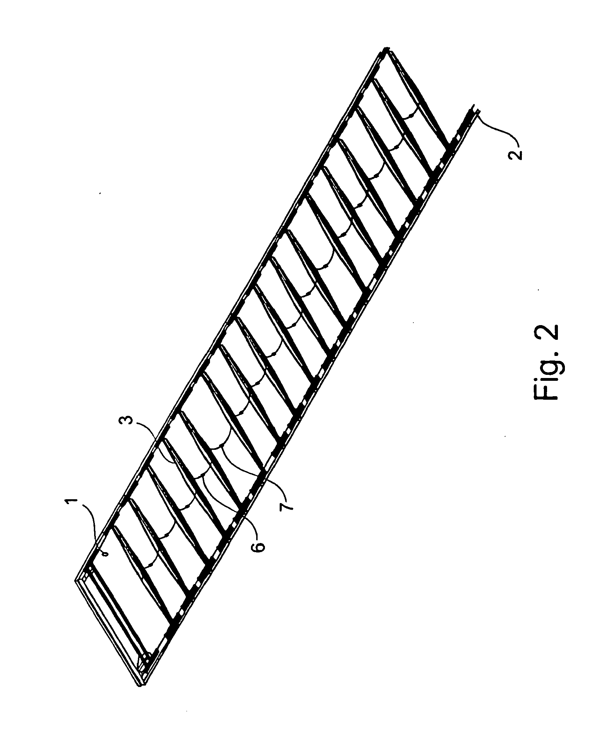

- Fig. 2: den Gegenstand nach Fig. 1, wobei die Dachplane nicht dargestellt ist,
- Fig. 3: eine Detailansicht des Gegenstandes nach Fig. 2,
- Fig. 4: eine Detailansicht eines seitlichen Schnitts durch den Gegenstand nach Fig. 2,
- Fig. 5: einen Schnitt durch eine alternative Ausführungsform eines Blähkörpers,
- Fig. 6: eine perspektivische teilgeschnittene Ansicht des Gegenstandes nach Fig. 5 und
- Fig. 7: eine perspektivische Ansicht einer alternativen Ausführungsform eines Blähkörpers

In allen Figuren werden für gleiche bzw. gleichartige Bauteile übereinstimmende Bezugszeichen verwendet.

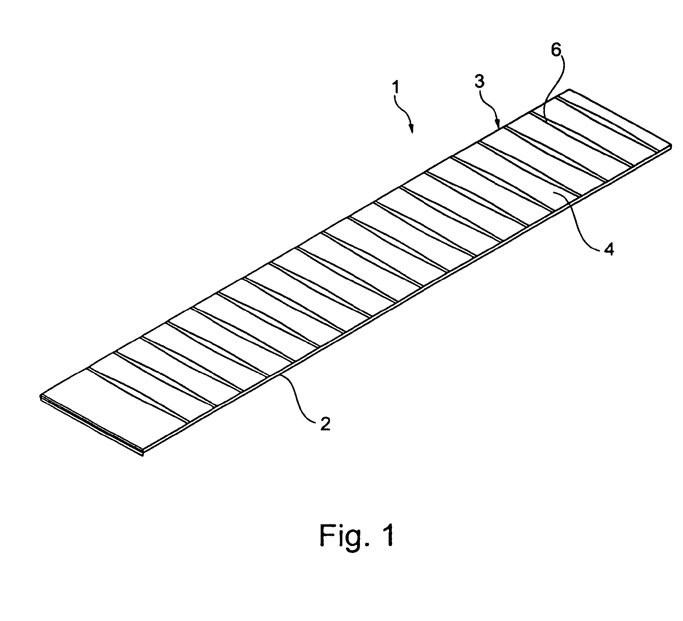

Fig. 1 zeigt ein Schiebeverdeck 1 für LKW oder LKW-Anhänger, das im dargestellten Ausführungsbeispiel auf Lauf- und Führungsschienen 2, die oberhalb der in der Zeichnung nicht dargestellten Ladefläche des LKW oder LKW-Anhängers auf entsprechenden Stützen angeordnet sind, verschieblich ist.

In den Lauf- und Führungsschienen 2 ist ein zusammenfaltbares Verdeck 3 verschieblich geführt, welches eine in Teilbereichen doppelwandige Kammern 6 bildende Dachplane 4 umfasst. Die Dachplane 4 ist in Fig. 1 noch flach.

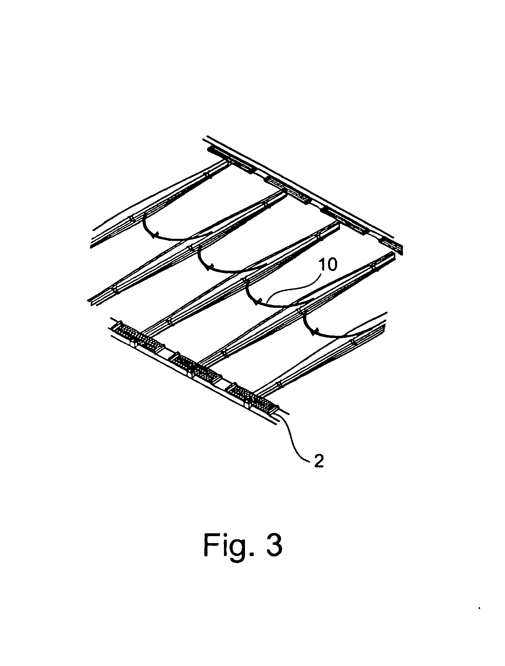

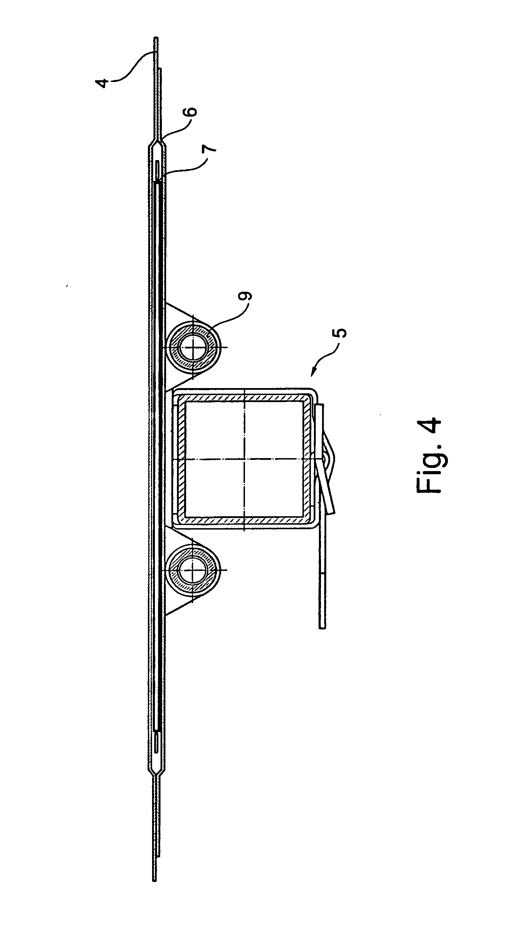

Dies ist auch in den Fig. 3 und 4 entsprechend erkennbar. In den Kammern 6 ist jeweils ein Blähkörper 7 mit einem Luftfüllanschlussmittel 9 vorgesehen. Dabei ist der Blähkörper 7 mittels einer in der Zeichnung nicht dargestellten Luftfülleinrichtung über das Luftfüllanschlussmittel 9 in eine zumindest außenseitig wenigstens leicht gewölbte aufgeblähte Form aufblasbar. Durch die Höhenvergrößerung der Kammer 6 infolge der Volumenvergrößerung des Blähkörpers 7 erfolgt ein Spannen der Dachplane 4 in Längsrichtung des Schiebeverdecks 1.

Die Blähkörper 7 können durch separate Verbindungselemente 10 miteinander verbunden sein und mit Luft versorgt werden.

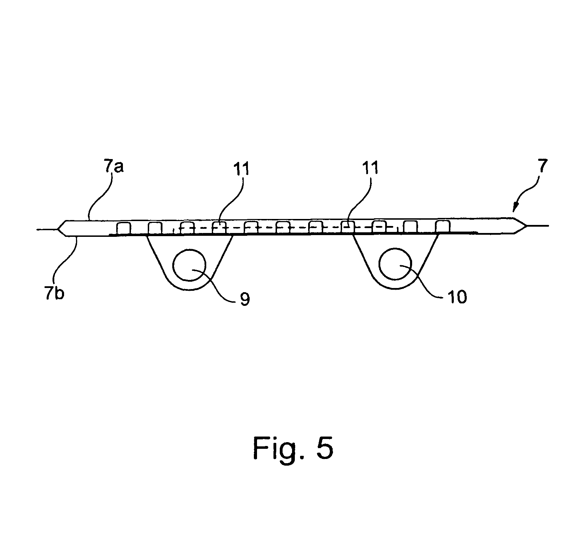

In Fig. 5 ist eine alternative Ausführungsform eines erfindungsgemäßen Blähkörpers 7 dargestellt. Der Blähkörper 7 besteht aus zwei Blähkörperhälften 7a, 7b, die umfangsseitig beispielsweise durch Verkleben und/oder Verschweißen miteinander verbunden sind. Die Innenfläche der in dieser Figur unteren Blähkörperhälfte 7b weist eine Profilierung 11 auf. Die Profilierung 11 verhindert, dass beim Ablassen der Luft die beiden gegenüberliegenden Blähkörperhälften 7a, 7b flächig in Kontakt kommen und sorgt dafür, dass die beiden gegenüberliegenden Blähkörperhälften 7a, 7b lediglich partiell in Kontakt kommen, um somit ein Festsaugen zu vermeiden.

In dem dargestellten Ausführungsbeispiel sind das Luftfüllanschlussmittel 9 und das Verbindungselement 10, über das der Blähkörper 7 mit einem benachbarten Blähkörper 7 durch einen Schlauch verbunden ist, in der unteren Blähkörperhälfte 7b angeordnet.

Bei dem dargestellten Ausführungsbeispiel ist sowohl in dem jeweiligen Bereich des Luftanschlussmittels 9 und des Verbindungselementes 10 als auch angrenzend an diese Bereiche eine Profilierung 11 vorgesehen. Diese Profilierung 11 verhindert beispielsweise bei einem Ablassen der Luft, dass sich die obere Blähkörperhälfte vor das Luftfüllanschlussmittel 9 legt und ein weiteres Absaugen verhindert.

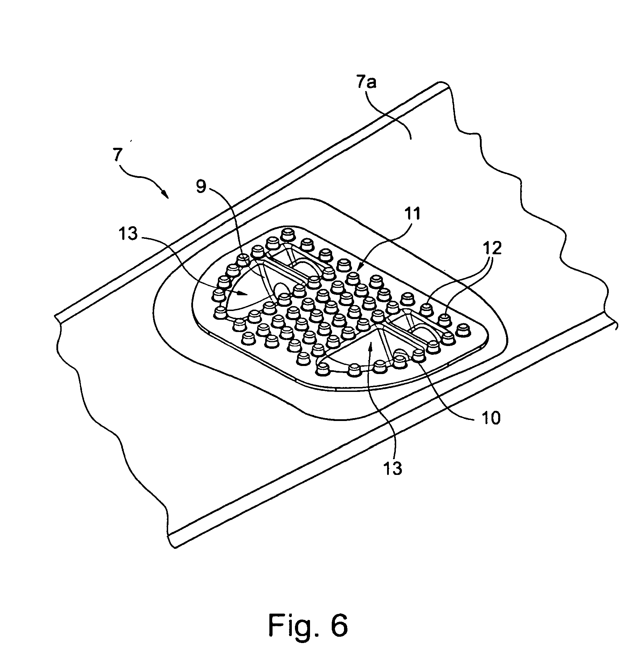

Wie aus Fig. 6 ersichtlich kann die Profilierung 11 als ein Formteil mit mehreren verteilt angeordneten Erhöhungen 12 ausgebildet sein, welches Freiräume 13 als Durchlass zu dem Luftfüllanschlussmittel 9 und dem Verbindungselement 10 aufweist.

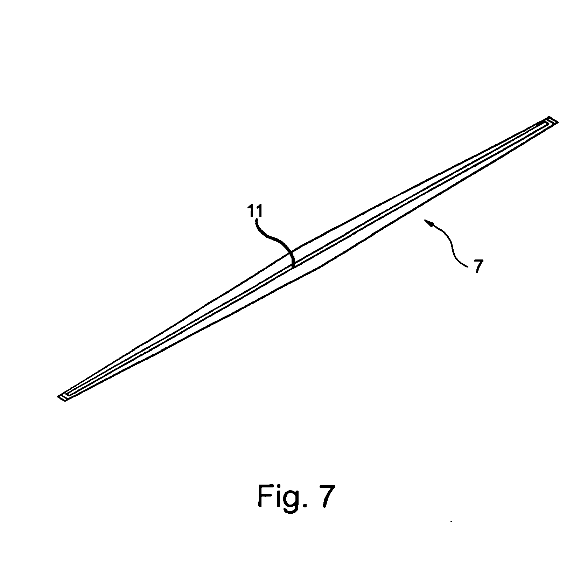

Auch kann die Profilierung 11 - wie aus Fig. 7 ersichtlich - als ein sich über die Länge des Blähkörpers erstreckendes und insbesondere nur dem mittleren Bereich der seitlichen Ausdehnung des Blähkörpers entsprechendes Element ausgebildet sein, wobei die Profilierung auch geprägt sein kann. Dabei ist die Profilierung bevorzugt derart ausgebildet, dass eine Art Kanal über die Länge und/oder die Breite der Profilierung freigelassen wird.

## Patentansprüche

1. Dachplane (4) für Verdecke (3) von LKW's oder LKW-Anhängern, wobei die Dachplane (4) zumindest teilweise doppelwandig mit wenigstens einer Kammer (6) ausgebildet ist,
wobei in zumindest einer Kammer ein Blähkörper (7) mit einem Luftfüllanschlussmittel (9) vorgesehen ist, wobei der Blähkörper (7) mittels einer Luftfülleinrichtung über das Luftfüllanschlussmittel (9) in eine zumindest außenseitig wenigstens leicht gewölbte
aufgeblähte Form aufblasbar ist, **dadurch gekennzeichnet, dass** zumindest ein
Blähkörper (7) im Bereich wenigstens einer seiner Innenflächen eine Profilierung (11) aufweist
und/oder im Bereich zumindest eines Luftfüllanschlussmittels (9) und/oder angrenzend an zumindest ein Luftfüllanschlussmittel (9) eine Profilierung (11) vorgesehen ist.

2. Dachplane (4) nach dem vorhergehenden Anspruch, **dadurch gekennzeichnet, dass** die Kammern (6) für einen leichten Austausch eines Blähkörpers (7) eine entsprechende, insbesondere seitlich vorgesehene Öffnung aufweisen.

3. Dachplane (4) nach einem der vorhergehenden Ansprüche, **dadurch gekennzeichnet, dass** das Luftfüllanschlussmittel (9) als Anschlusselement für einen Pneumatikschlauch ausgebildet ist.

4. Dachplane (4) nach einem der vorhergehenden Ansprüche, **dadurch gekennzeichnet, dass** das Luftfüllanschlussmittel (9) auch als Luftablassmittel ausgebildet ist, durch welches ein Luftaustritt möglich ist.

5. Dachplane (4) nach einem der vorhergehenden Ansprüche, **dadurch gekennzeichnet, dass** eine kombinierte Lüftfüll- und Luftablass- bzw. Luftabsaugeinrichtung, vorgesehen ist.

6. Dachplane (4) nach einem der vorhergehenden Ansprüche, **dadurch gekennzeichnet, dass** zumindest eine Kammer (6) innenseitig auf zumindest einer Innenfläche beflockt ist.

7. Dachplane (4) nach einem der vorhergehenden Ansprüche, **dadurch gekennzeichnet, dass** die Dachplane (4) an zumindest einem Endbereich, insbesondere am vorderen und hinteren Endbereich, jeweils eine Kederbefestigung aufweist, mittels derer sie an dem LKW oder LKW-Anhänger anbringbar ist.

8. Dachplane (4) nach einem der vorhergehenden Ansprüche, **dadurch gekennzeichnet, dass** die untere Wandungslage der Dachplane (4) an Querspriegeln (5) befestigbar ist.

9. Dachplane (4) nach einem der vorhergehenden Ansprüche, **dadurch gekennzeichnet, dass** zumindest eine Kammer (6) der Dachplane (4) sich zu den Seitenbereichen hin verengend ausgebildet ist, insbesondere seitlich spitz, z. B. in Form einer Raute oder Ellipse, zuläuft.

10. Dachplane (4) nach einem der vorhergehenden Ansprüche, **dadurch gekennzeichnet, dass** zumindest ein Blähkörper (7) sich zu den Seitenbereichen hin verengend ausgebildet ist, insbesondere seitlich spitz, z. B. in Form einer Raute oder Ellipse, zuläuft.

11. Dachplane (4) nach einem der vorhergehenden Ansprüche, **dadurch gekennzeichnet, dass** zumindest eine Kammer (6), insbesondere sämtliche Kammern (6), in Längsrichtung der Dachplane (4) gesehen mit ihrer Mitte auf Querspriegeln (5) des LKW oder LKW-Anhänger angeordnet ist bzw. anordnenbar ist/sind.

12. Dachplane (4) nach einem der vorhergehenden Ansprüche, **dadurch gekennzeichnet, dass** für die Steuerung der Lüftfüllung und/oder des Luftablassens bzw. Luftabsaugens manuell betätigbare Ventile vorgesehen sind.

## Claims

1. Roof awning (4) for covers (3) on HGVs or HGV trailers, wherein the roof awning (4) is at least partly of a double-walled design with at least one chamber (6), wherein, in at least one chamber, an inflatable body (7) with an air filling connection means (9) is provided, wherein the inflatable body (7) is inflatable by means of an air filling device via the air filling connection means (9) to achieve an inflated shape which is at least slightly domed at least on the outside, **characterised in that** at least one inflatable body (7) features a profiling (11) in the area of at least one of its inner surfaces and/or a profiling (11) is provided in the area of at least one air filling connection means (9) and/or adjacent to at least one air filling connection means (9).

2. Roof awning (4) according to claim 1, **characterised in that** the chambers (6) feature, for an easy exchange of an inflatable body (7), a corresponding opening, especially one that is provided laterally.

3. Roof awning (4) according to any one of the preceding claims, **characterised in that** the air filling connection means (9) is designed as a connection element for a pneumatic hose.

4. Roof awning (4) according to any one of the preceding claims, **characterised in that** the air filling connection means (9) is also designed as an air release means, through which an air outflow is possible.

5. Roof awning (4) according to any one of the preceding claims, **characterised in that** a combined air filling and air release or air extraction device is provided.

6. Roof awning (4) according to any one of the preceding claims, **characterised in that** at least one chamber (6) is flocked inside, on at least one inner surface.

7. Roof awning (4) according to any one of the preceding claims, **characterised in that** the roof awning (4) has, in at least one end area, especially in the front and rear end area, a piping attachment each, by means of which it can be attached to the HGV or HGV trailer.

8. Roof awning (4) according to any one of the preceding claims, **characterised in that** the bottom wall layer of the roof awning (4) can be attached to roof struts (5).

9. Roof awning (4) according to any one of the preceding claims, **characterised in that** at least one chamber (6) of the roof awning (4) is designed to narrow towards the side areas, especially tapering laterally, e.g. in the shape of a rhombus or an ellipse.

10. Roof awning (4) according to any one of the preceding claims, **characterised in that** at least one inflatable body (7) is designed to narrow towards the side areas, especially tapering laterally, e.g. in the shape of a rhombus or an ellipse.

11. Roof awning (4) according to any one of the preceding claims, **characterised in that** at least one chamber (6), especially all chambers (6), seen in the longitudinal direction of the roof awning (4), is/are arranged with its/their centre(s) on roof struts (5) of the HGV or HGV trailer or can be thus arranged.

12. Roof awning (4) according to any one of the preceding claims, **characterised in that** manually operable valves are provided for controlling the air filling and/or the air release or air extraction.

## Revendications

1. Bâche (4) destinée à des toits (3) de poids lourds ou de remorques de poids lourds, ladite bâche (4) étant, au moins partiellement, réalisée munie d'une paroi double présentant au moins une chambre (6), sachant qu'au moins une chambre renferme un corps expansible (7) pourvu d'un moyen (9) formant raccord d'emplissage par de l'air, ledit corps expansible (7) pouvant être gonflé au moyen d'un dispositif d'emplissage par de l'air, à l'aide dudit moyen (9) formant raccord d'emplissage, jusqu'à une forme expansée offrant au moins un léger bombement, au moins à la face extérieure, **caractérisée par le fait qu'**au moins un corps expansible (7) présente un profilage (11) dans la région d'au moins l'une de ses surfaces intérieures ; et/ou un profilage (11) est prévu dans la région d'au moins un moyen (9) formant raccord d'emplissage par de l'air et/ou dans la zone limitrophe d'au moins un moyen (9) formant raccord d'emplissage par de l'air.

2. Bâche (4) selon la revendication précédente, **caractérisée par le fait que** les chambres (6) comportent, en vue du remplacement aisé d'un corps expansible (7), un orifice correspondant qui est notamment prévu dans le sens latéral.

3. Bâche (4) selon l'une des revendications précédentes, **caractérisée par le fait que** le moyen (9), formant raccord d'emplissage par de l'air, est réalisé sous la forme d'un élément de raccordement affecté à un tuyau pneumatique.

4. Bâche (4) selon l'une des revendications précédentes, **caractérisée par le fait que** le moyen (9) formant raccord d'emplissage par de l'air est également réalisé sous la forme d'un moyen d'échappement de l'air, par l'intermédiaire duquel une sortie d'air est possible.

5. Bâche (4) selon l'une des revendications précédentes, **caractérisée par le fait qu'**il est prévu un dispositif combiné d'emplissage par de l'air et, respectivement, d'échappement de l'air ou d'évacuation de l'air par aspiration.

6. Bâche (4) selon l'une des revendications précédentes, **caractérisée par le fait qu'**au moins une chambre (6) est revêtue intérieurement par flocage, sur au moins une face intérieure.

7. Bâche (4) selon l'une des revendications précédentes, **caractérisée par le fait que** ladite bâche (4) est respectivement dotée dans au moins une région extrême, en particulier dans les régions extrêmes antérieure et postérieure, d'une fixation par bourrelets de renfort au moyen de laquelle elle peut être installée sur le poids lourd ou sur la remorque de poids lourd.

8. Bâche (4) selon l'une des revendications précédentes, **caractérisée par le fait que** la couche inférieure de cloisonnement de ladite bâche (4) peut être fixée à des arceaux transversaux (5).

9. Bâche (4) selon l'une des revendications précédentes, **caractérisée par le fait qu'**au moins une chambre (6) de ladite bâche (4) est réalisée avec rétrécissement en direction des régions latérales et s'achève notamment en pointe, dans le sens latéral, par exemple sous la forme d'un losange ou d'une ellipse.

10. Bâche (4) selon l'une des revendications précédentes, **caractérisée par le fait qu'**au moins un corps expansible (7) est réalisé avec rétrécissement en direction des régions latérales et s'achève notamment en pointe, dans le sens latéral, par exemple sous la forme d'un losange ou d'une ellipse.

11. Bâche (4) selon l'une des revendications précédentes, **caractérisée par le fait qu'**en observant dans la direction longitudinale de ladite bâche (4), au moins une chambre (6) et, en particulier, toutes les chambres (6) est/sont disposée(s) ou peu(ven)t respectivement être disposée(s), par son/leur centre, sur des arceaux transversaux (5) du poids lourd ou de la remorque de poids lourd.

12. Bâche (4) selon l'une des revendications précédentes, **caractérisée par le fait que** des vannes, actionnables à la main, sont prévues pour la commande de l'emplissage par de l'air et/ou, respectivement, de l'échappement de l'air ou de l'évacuation de l'air par aspiration.
